# DEMANDE DE BREVET EUROPEEN

(11) **EP 1 783 510 A1**
(43) Date de publication de la demande: **09.05.2007**
(21) Numéro de dépôt: 05300896.7
(22) Date de dépôt: 07.11.2005
(51) Int. Cl.: G01S 1/00

(54) **DISPOSITIF DE TRAITEMENT DE DONNEES DE NAVIGATION D'UN SYSTEME DE NAVIGATION PAR SATELLITES, POUR LA FOURNITURE DE CARTES DE ZONES D'INTEGRITE**

(71) Demandeur: Alcatel Lucent, 75008 Paris (FR)
(72) Inventeur: LEVY, Jean Christophe, 31037, TOULOUSE CEDEX 01 (FR); FLAMENT, Didier, 31130, QUINT-FONSEGRIVES (FR)
(74) Mandataire: Hedarchet, Stéphane

(57) **Abrégé**

Un dispositif (DT) est dédié au traitement de données de navigation relatives à des satellites d'un système de navigation par satellites, en orbite autour d'un astre. Ce dispositif (DT) comprend des moyens de traitement (MT) chargés de comparer des données d'intégrité (DI), représentatives de valeurs de fiabilité de corrections d'erreurs de positionnement orbital et/ou de synchronisation des satellites, à au moins un ensemble choisi de N valeurs seuils choisies, N étant un entier supérieur ou égal à un, de manière à délivrer au moins un groupe de données cartographiques représentatives d'au plus N+1 zones géographiques définies par rapport à l'astre et dans lesquelles les données d'intégrité sont soit inférieures aux N valeurs seuil de l'ensemble choisi, soit supérieures aux N valeurs seuil de l'ensemble choisi, soit encore comprises entre deux valeurs seuil de l'ensemble choisi.

## Description

L'invention concerne les systèmes de navigation par satellites, et plus précisément les informations d'intégrité représentatives des valeurs de fiabilité des corrections d'erreurs de positionnement orbital et/ou de synchronisation des satellites de tels systèmes.

On entend ici par « système de navigation par satellites » tout système dédié à la navigation large zone, comme par exemple les systèmes existants appelés GPS, EGNOS et WAAS ou le futur système GALILEO, ainsi que tous leurs équivalents et dérivés.

Comme le sait l'homme de l'art, les messages de navigation, qui sont diffusés vers les terminaux des utilisateurs par les satellites des systèmes de navigation par satellites, comportent des informations de navigation relatives à leur position orbitale et/ou leur synchronisation (décalage de leur horloge interne par rapport à l'horloge de référence du système). Ces informations de navigation sont déterminées en trois étapes. La première étape consiste à déterminer des informations brutes. Ces dernières étant entachées d'erreurs, on détermine dans la deuxième étape les corrections d'erreur qui doivent leur être appliquées. La troisième étape consiste à appliquer les corrections d'erreur aux informations brutes afin qu'elle deviennent des informations de navigation.

En raison de l'importance que peuvent revêtir les informations de navigation pour certains utilisateurs, comme par exemple les pilotes d'avions, on détermine également des données d'intégrité représentatives des valeurs de fiabilité des corrections d'erreur utilisées pour les produire. Ces données d'intégrité sont transmises aux utilisateurs, afin qu'ils puissent agir en conséquence.

Par exemple dans le cas d'un système de type EGNOS, deux données d'intégrité sont déterminées : l'une est appelée UDRE (pour « User Differential Range Error ») et est associée au satellite, l'autre est appelée GIVE (pour « Grid lonospheric Vertical Error ») et est associée à l'ionosphère.

Lorsque l'on trace la courbe d'évolution du nombre d'utilisateurs d'un système de navigation par satellites en fonction de l'erreur de positionnement orbital et de synchronisation, on obtient une courbe grossièrement en forme de plan et dont l'un des coins correspond à l'utilisateur (dit « le pire ») disposant, du fait de son positionnement, des informations de navigation les moins fiables. Par définition, l'UDRE est la valeur de l'erreur de positionnement orbital et de synchronisation qui a une probabilité fixée de majorer l'erreur de positionnement orbital et de synchronisation du pire utilisateur. Elle constitue donc une valeur de référence fonction de la marge d'intégrité du pire utilisateur. Tous les utilisateurs, autres que le pire utilisateur, disposent donc d'une marge d'intégrité (définie par rapport à l'UDRE), supérieure à la marge d'intégrité dudit pire utilisateur.

Pour calculer les données d'intégrité, on utilise par exemple un outil tel que celui appelé SREW (pour « Satellite Residual Error for the Worst user »).

Comme le sait l'homme de l'art, les données d'intégrité ne sont pas figées. Elles évoluent au cours du temps, notamment en fonction de l'état de l'architecture du système de navigation par satellites. Ainsi, lorsque des informations sont perdues dans le système, ou bien lorsqu'un équipement d'un système de navigation par satellites situé à proximité du pire utilisateur, comme par exemple une station de surveillance chargée de collecter les messages de navigation transmis par les satellites et d'effectuer des mesures relatives aux pseudo-distances qui les séparent des satellites en vue, fait l'objet d'une panne ou d'une intervention de maintenance, des informations manquent au centre de calcul si bien que l'UDRE n'est plus espacée d'une distance fixée (fonction de la probabilité de majoration) de la valeur de l'erreur de positionnement orbital et de synchronisation du pire utilisateur. En d'autres termes, la marge d'intégrité du pire utilisateur est réduite.

Aujourd'hui, lorsqu'une telle situation survient, l'équipe chargée de surveiller le fonctionnement du système de navigation par satellites interrompt la fourniture des messages de navigation à destination des utilisateurs, dans un souci d'intégrité physique. Or, cette interruption, qui est totalement justifiée pour quelques uns des utilisateurs, est pénalisante pour la plupart des autres utilisateurs dont la marge d'intégrité initiale était sensiblement supérieure à la marge d'intégrité initiale du pire utilisateur et qui auraient pu continuer à utiliser le système de navigation par satellites sans réelle augmentation de risque.

L'invention a donc pour but d'améliorer la situation.

Elle propose à cet effet un dispositif de traitement de données de navigation relatives à des satellites d'un système de navigation par satellites, en orbite autour d'un astre, comprenant des moyens de traitement chargés de comparer des données d'intégrité, représentatives de valeurs de fiabilité de corrections d'erreurs de positionnement et/ou de synchronisation des satellites, à au moins un ensemble choisi de N valeurs seuils choisies, N étant un entier supérieur ou égal à un, de manière à délivrer au moins un groupe de données cartographiques représentatives d'au plus N+1 zones géographiques définies par rapport à l'astre et dans lesquelles les données d'intégrité sont soit inférieures aux N valeurs seuil de l'ensemble choisi, soit supérieures aux N valeurs seuil de l'ensemble choisi, soit encore comprises entre deux valeurs seuil de l'ensemble choisi.

Le dispositif selon l'invention peut comporter d'autres caractéristiques qui peuvent être prises séparément ou en combinaison, et notamment :
- ses moyens de traitement peuvent être chargés de comparer des données d'intégrité à au moins deux ensembles choisis de Ni valeurs seuils choisies, les Ni étant des entiers supérieurs ou égaux à un, afin de délivrer au moins deux groupes de données cartographiques représentatives chacune d'au plus Ni+1 zones géographiques définies par rapport à l'astre et dans lesquelles ces données d'intégrité sont soit inférieures aux Ni valeurs seuil de l'ensemble choisi, soit supérieures aux N valeurs seuil de l'ensemble choisi, soit encore comprises entre deux valeurs seuil de l'ensemble choisi ;
- les valeurs seuil sont par exemple représentatives de marges d'intégrité par rapport à une valeur de référence (comme par exemple l'UDRE), elle-même définie par rapport à l'utilisateur du système de navigation par satellites disposant de la valeur de fiabilité de corrections d'erreurs de positionnement et/ou de synchronisation des satellites la moins bonne ;
- ses moyens de traitement peuvent être chargés de déterminer chaque groupe de données cartographiques à partir des données d'intégrité les plus récentes, afin de permettre un fonctionnement quasiment en temps réel ;
- il peut comprendre des moyens de calcul chargés de déterminer les données d'intégrité à partir au moins, d'une première part, de premières données représentatives d'informations contenues dans des messages de navigation diffusés par les satellites, d'une deuxième part, de deuxièmes données représentatives d'estimations des positions des satellites, et d'une troisième part, de troisièmes données représentatives d'estimations des décalages temporels des horloges des satellites par rapport à une horloge de référence ;
- les moyens de calcul peuvent alors être chargés de déterminer les données d'intégrité à partir de premières, deuxièmes et troisièmes données de référence et de quatrièmes données représentatives d'une architecture choisie du système de navigation par satellites. Cela permet un fonctionnement prévisionnel du système de navigation par satellites et/ou de déterminer l'influence de pannes et/ou d'intervention de maintenance sur des équipements du système de navigation par satellites ;
- les moyens de traitement peuvent être éventuellement intégrés dans les moyens de calcul ;
- il peut comprendre des moyens d'affichage chargés de matérialiser les zones géographiques, définies par les données cartographiques déterminées, par rapport à des régions correspondantes à la surface de l'astre.

L'invention est particulièrement bien adaptée, bien que de façon non exclusive, aux services d'intégrité de systèmes de navigation par satellites comme par exemple GALILEO, GPS, EGNOS et WAAS, ainsi que leurs variantes et leurs équivalents.

D'autres caractéristiques et avantages de l'invention apparaîtront à l'examen de la description détaillée ci-après, et des dessins annexés, sur lesquels :
- la figure 1 illustre de façon très schématique et fonctionnelle un premier exemple de réalisation d'un dispositif de traitement selon l'invention, couplé à un outil de calcul de données d'intégrité,
- la figure 2 illustre de façon très schématique et fonctionnelle un deuxième exemple de réalisation d'un dispositif de traitement selon l'invention, intégrant des moyens de calcul de données d'intégrité,
- la figure 3 illustre de façon très schématique et fonctionnelle une variante du deuxième exemple de réalisation du dispositif de traitement illustré sur la figure 2,
- la figure 4 est un diagramme illustrant la courbe d'évolution du nombre (NU) d'utilisateurs d'un système de navigation par satellites en fonction de l'erreur de positionnement orbital et/ou de synchronisation (EPS) et la matérialisation de deux zones (de service) définies au moyen d'un dispositif de traitement selon l'invention et dans lesquelles les valeurs des données d'intégrité sont respectivement supérieures et inférieures à une valeur seuil choisie, et
- la figure 5 illustre schématiquement les positions des deux zones (de service) de la figure 4 par rapport à une carte géographique d'une partie de l'Europe.

Les dessins annexés pourront non seulement servir à compléter l'invention, mais aussi contribuer à sa définition, le cas échéant.

L'invention a pour objet de permettre une flexibilité d'utilisation des données d'intégrité et/ou la détermination de l'influence sur les données d'intégrité d'une zone géographique des pannes et/ou des interventions de maintenance sur des équipements du système de navigation par satellites.

Dans ce qui suit, on considère à titre d'exemple non limitatif que le système de navigation par satellites est le système de type dit « augmenté » (ou SBAS pour « Satellite Based Augmentation System ») EGNOS. Mais l'invention n'est pas limitée aux systèmes de navigation par satellites de type SBAS. Elle concerne d'une manière générale tout système dédié à la navigation par satellites dans de larges zones (ou régions), comme par exemple les systèmes existants GPS (en particulier GPS III) et WAAS ou le futur système GALILEO, ainsi que tous leurs équivalents et dérivés.

Comme le sait l'homme de l'art, un système de navigation par satellites comprend une constellation de satellites, un ensemble de stations de surveillance (terrestres ou spatiales), et un centre de calcul.

Schématiquement, les satellites de la constellation sont placés en orbite autour d'un astre, tel que la Terre, et sont chargés, notamment, d'émettre des signaux permettant de faire des mesures de pseudo-distances et de diffuser en direction de la Terre T des messages de navigation qui leurs sont transmis par le segment sol de mission, afin que les informations qu'ils contiennent soient exploitées par des récepteurs de navigation d'utilisateurs et par les stations de surveillance.

Les stations de surveillance sont situées en des endroits choisis de la Terre ou dans des engins spatiaux, comme par exemple des satellites. Elles sont notamment chargées, d'une part, de collecter les messages de navigation transmis par les satellites de la constellation, et d'autre part, d'effectuer des mesures relatives aux pseudo-distances qui les séparent des satellites en vue afin de les communiquer au centre de calcul.

Le centre de calcul est généralement implanté sur la Terre. Elle comprend généralement un dispositif de vérification de cohérence chargé, notamment, de contrôler la cohérence entre les pseudo-distances et les informations contenues dans les messages de navigation (diffusés par les satellites), qui lui sont communiqués par les stations de surveillance. Le centre de calcul peut également être chargé de prédire les trajectoires des satellites et les décalages de leurs horloges internes par rapport à l'horloge de référence du système, à partir des pseudo-distances déterminées par les stations de surveillance.

Ces prédictions de trajectoires et de décalages d'horloge (synchronisation) servent à générer les futurs messages de navigation qui sont transmis aux satellites afin qu'ils les diffusent. Elles intègrent les corrections d'erreurs présentées dans la partie introductive. Par ailleurs, elles sont complétées par des données d'intégrité qui représentent des valeurs de fiabilité des corrections d'erreur, et qui sont transmises aux utilisateurs, afin qu'ils puissent agir en conséquence. Ces données d'intégrité peuvent par exemple être déterminées au moyen d'un outil tel que SREW Tool.

L'invention concerne plus particulièrement le traitement des données d'intégrité qui constituent une partie des données de navigation.

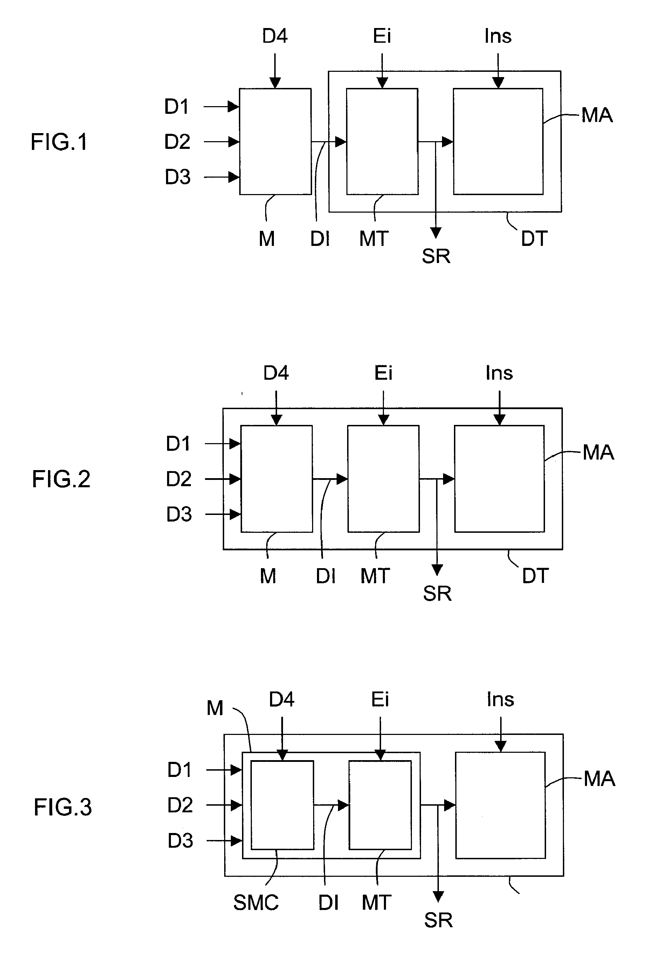

On se réfère tout d'abord à la figure 1 pour décrire un premier exemple de réalisation d'un dispositif DT, selon l'invention, dédié au traitement de données de navigation. Un tel dispositif DT peut par exemple être implanté dans le centre de calcul. Mais cela n'est pas obligatoire.

Selon l'invention, le dispositif de traitement DT comprend au moins un module de traitement MT chargé, notamment, de comparer des données d'intégrité DI, qui sont représentatives de valeurs de fiabilité de corrections d'erreurs de positionnement orbital et/ou de synchronisation des satellites de la constellation, à au moins un ensemble choisi de N valeurs seuils choisies. N est ici un entier supérieur ou égal à un (N>0).

Dans l'exemple illustré sur la figure 1, les données d'intégrité DI sont fournies par un outil de calcul externe MC, par exemple de type SREW Tool. Mais dans une variante, illustrée sur la figure 2, le dispositif de traitement DT peut soit intégrer l'outil de calcul MC chargé de délivrer les données d'intégrité DI, soit constituer une évolution de l'outil de calcul comprenant un module de calcul de données d'intégrité MC couplé à un module de traitement MT. Dans une autre variante illustrée sur la figure 3, le dispositif de traitement DT peut comporter un module de calcul MC intégrant à la fois un sous-module de calcul de données d'intégrité SMC et un module de traitement MT couplés l'un à l'autre.

Le (sous-)module de calcul MC (ou SMC) est chargé de déterminer les données d'intégrité DI à partir d'au moins des premières D1, deuxièmes D2 et troisièmes D3 données externes.

Les premières données externes D1 sont représentatives d'informations qui sont contenues dans les messages de navigation diffusés par les satellites de la constellation. Il s'agit plus précisément des informations de correction d'erreur en provenance de l'espace, appelées en anglais « signal in space corrections ».

Les deuxièmes données externes D2 sont représentatives d'estimations des positions des satellites. Il s'agit plus précisément de ce que l'on appelle habituellement les vraies positions des satellites. Elles représentent les positions orbitales les plus précises des satellites. De telles deuxièmes données externes D2 peuvent être obtenues par tout moyen connu de l'homme de l'art, et notamment sur Internet (par exemple auprès de l'IGS), ou au moyen d'un système capable de fournir une estimation précise et fiable des orbites et temps des satellites.

Les troisièmes données externes D3 sont représentatives des estimations des décalages temporels des horloges des satellites par rapport à l'horloge de référence du système de navigation par satellites. Il s'agit plus précisément de ce que l'on appelle habituellement les vrais décalages d'horloge des satellites. Elles représentent les décalages d'horloge les plus précis des satellites. De telles troisièmes données externes D3 peuvent être obtenues par tout moyen connu de l'homme de l'art, et notamment sur Internet (par exemple auprès de l'IGS), ou au moyen d'un système capable de fournir une estimation précise et fiable des orbites et temps des satellites.

Les données d'intégrité DI qui sont délivrées par le (sous-)module de calcul (S)MC, sont par exemple ce que l'on appelle les erreurs de positionnement orbital et/ou de synchronisation des satellites EPS.

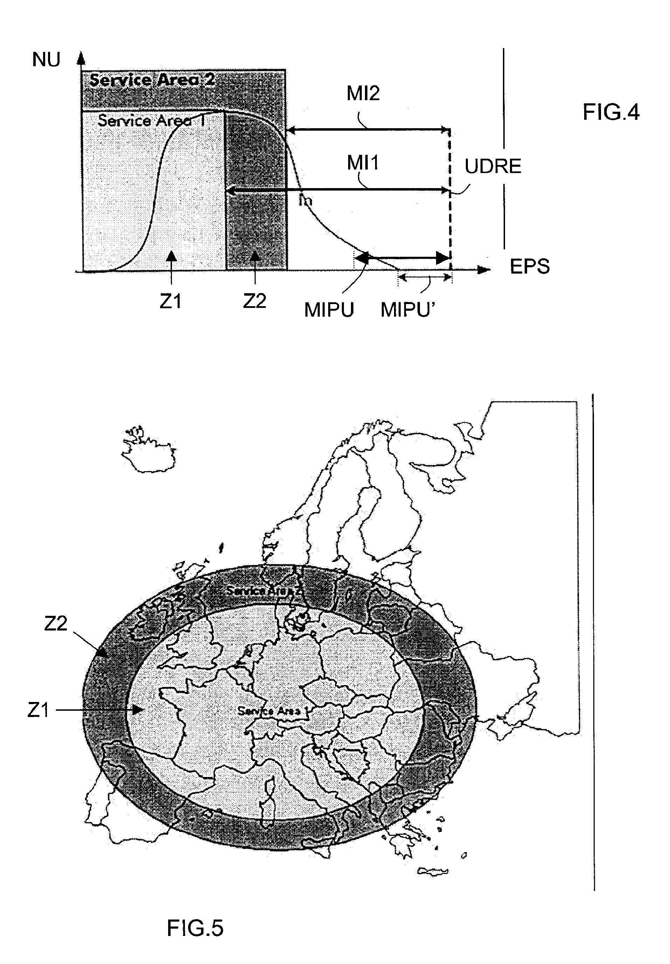

Connaissant ces erreurs de positionnement orbital et/ou de synchronisation des satellites EPS et les positions des récepteurs de navigation des utilisateurs, on peut alors connaître la courbe d'évolution du nombre NU d'utilisateurs d'un système de navigation par satellites en fonction de l'erreur de positionnement orbital et/ou de synchronisation EPS. Un exemple d'une telle courbe est illustré dans le diagramme de la figure 4.

Lorsqu'à un instant donné le module de calcul MC dispose de la totalité des informations utiles à ses calculs, c'est-à-dire lorsqu'aucune information n'est-perdue et lorsque tous les équipements du système de navigation par satellites fonctionnent, et notamment les stations de surveillance, l'extrémité droite de la courbe permet de déterminer l'utilisateur qui dispose de la plus mauvaise valeur d'erreur de positionnement orbital et/ou de synchronisation EPS. Cet utilisateur est appelé « le pire utilisateur ». Cette plus mauvaise valeur sert à déterminer la valeur de l'UDRE (définie dans la partie introductive). L'équipe de surveillance peut décider d'interrompre ou d'autoriser l'utilisation des données de navigation selon la capacité du système à calculer une UDRE fiable (par exemple 10⁻⁷/ 150 secondes) pour le pire usager de la zone. Plus précisément, l'UDRE est positionnée à une distance fixée de la plus mauvaise valeur précitée. Cette distance fixée définit ce que l'on appelle la marge d'intégrité initiale du pire utilisateur MIPU, laquelle est la plus petite parmi toutes celles dont disposent les utilisateurs du système de navigation par satellites.

Lorsque des informations utiles au calcul des données d'intégrité manquent dans la zone dans laquelle est situé le pire utilisateur, la marge d'intégrité du pire utilisateur MIPU' est alors réduite (MIPU'<MIPU), du fait que la valeur de l'UDRE est fixée par la valeur initiale MIPU. Dans ce cas, la courbe se déforme vers la droite, comme illustré dans l'exemple de la figure 4. L'équipe de surveillance ne pouvant pas savoir lorsqu'une telle situation survient, elle fait donc l'hypothèse qu'une configuration minimale du réseau de stations de surveillance est nécessaire pour assurer cette marge d'intégrité. Ainsi, la prise de décision de l'arrêt du système se fait au moyen de critères très faiblement corrélés à la marge d'intégrité et donc réglée de façon classique.

L'invention propose d'introduire de la flexibilité dans les prises de décision relatives à l'interruption de la fourniture des données de navigation aux utilisateurs.

En effet, comme indiqué ci-avant, une fois que le module de traitement MT dispose des données d'intégrité DI, comme par exemple les marges d'intégrité des différents utilisateurs, il peut les comparer à un (ou plusieurs) ensemble(s) Ei choisi(s) de Ni valeurs seuils choisies, avec i entier supérieur ou égal à un (i>0). Cette comparaison permet alors au module de traitement MT de délivrer un (ou plusieurs) groupe(s) de données cartographiques Gi qui représentent au plus Ni+1 zones géographiques Zj (j = 1 à Ni+1) définies par rapport à l'astre et dans lesquelles les données d'intégrité (par exemple les marges d'intégrité) DI sont soit inférieures aux Ni valeurs seuil de l'ensemble Ei choisi, soit supérieures aux Ni valeurs seuil de l'ensemble Ei choisi, soit encore comprises entre deux valeurs seuil de l'ensemble Ei choisi.

Chaque zone géographique Zj constitue ainsi une zone (de service) dans laquelle la marge d'intégrité (par exemple) est comprise dans un intervalle de valeurs particulier.

On entend ici par « données cartographiques » des données de position rapportées à un référentiel choisi bi ou tri dimensionnel et à un identifiant représentatif de la zone Zj correspondante. Cet identifiant peut être par exemple une information désignant une couleur particulière ou un niveau de gris particulier ou encore une texture particulière.

Dans l'exemple illustré sur la figure 4, deux seuils S1 et S2 ont été utilisés pour définir deux zones Z1 et Z2. La zone Z1 correspond aux données d'intégrité (par exemple les marges d'intégrité) DI qui sont inférieures aux deux (N=2) valeurs seuil d'un unique ensemble (E1). La zone Z2 correspond aux données d'intégrité (par exemple les marges d'intégrité) DI qui sont comprises entre les deux (N=2) valeurs seuil de l'ensemble (E1). La zone Z1 est donc une zone dans laquelle la marge d'intégrité est élevée, tandis que la zone Z2 est une zone dans laquelle la marge d'intégrité est dégradée, tout en demeurant acceptable pour de nombreux utilisateurs.

Par exemple, tous les utilisateurs qui sont situés dans la zone Z1 peuvent utiliser les données de navigation, quelle que soit leur utilisation, tandis que seuls les utilisateurs qui sont compris dans la zone Z2 et qui utilisent une application ne requérant pas une fiabilité maximale sont autorisés à utiliser les données de navigation. Au-delà de la zone Z2, la marge d'intégrité est considérée comme étant trop faible quelle que soit l'utilisation qui est faite des données de navigation.

Une telle situation peut par exemple correspondre à deux types d'utilisateurs : ceux qui utilisent des données de navigation pour piloter des avions et pour lesquels une fiabilité maximale est impérative (ils doivent être situés dans la zone Z1), et ceux qui utilisent des données de navigation pour piloter des bateaux et pour lesquels une fiabilité moyenne est suffisante (ils doivent être situés dans la zone Z1 ou Z2).

On entend ici par « types d'utilisateurs » des utilisateurs utilisant des données de navigation pour des applications différentes.

Cette situation peut également correspondre à un unique type d'utilisateurs, comme par exemple ceux qui utilisent des données de navigation pour piloter des avions et pour lesquels une fiabilité maximale est impérative en phase d'atterrissage (ils doivent être situés dans la zone Z1), tandis qu'une fiabilité moyenne est suffisante pendant le vol (ils doivent alors être situés dans la zone Z1 ou Z2).

Il est important de noter que l'on peut également utiliser le dispositif de traitement DT selon l'invention pour obtenir plusieurs (au moins deux) groupes Gi de données cartographiques destinées à des types d'utilisateurs Ti différents. Par exemple, un groupe G1 de données cartographiques peut être déterminé pour les utilisateurs qui utilisent des données de navigation pour piloter des avions, tandis qu'un groupe G2 de données cartographiques peut être déterminé pour les utilisateurs qui utilisent des données de navigation pour piloter des bateaux. Dans ce cas, chaque groupe Gi peut être déterminé à partir d'une comparaison effectuée au moyen de l'ensemble Ei, de Ni valeurs seuils choisies, qui a été défini par l'équipe de surveillance pour un type d'utilisateur Ti donné.

Les données cartographiques peuvent être délivrées sur une sortie SR afin d'être transmises en un ou plusieurs lieux choisis, comme par exemple un organisme de contrôle du trafic aérien (ATC pour « Air Traffic Control ») afin qu'il informe la communauté aéronautique, et/ou à l'organisme contrôlant le système de navigation par satellites (par exemple le PACF dans le cas d'EGNOS), et/ou aux satellites de la constellation pour qu'ils les diffusent aux utilisateurs sous la forme de « signal in space ».

Les données cartographiques peuvent être également délivrées à un module d'affichage MA du dispositif de traitement DT, comme cela est illustré sur les figures 1 à 3, afin qu'il gère leur matérialisation par rapport à un référentiel choisi, rapporté à au moins une partie choisie de la Terre, sur un écran d'affichage (non représenté). Un exemple d'une telle matérialisation est illustré sur la figure 5. Dans cet exemple, les deux zones (de service) Z1 et Z2, présentées ci-avant, sont matérialisées sur une carte géographique d'une partie de l'Europe, respectivement en gris clair et gris foncé.

Le module d'affichage MA peut être configuré de manière à matérialiser sur la carte géographique affichée des zones Zj de formes géométriques, par exemple elliptiques, circulaires ou annulaires. Mais cela n'est pas une obligation.

Par ailleurs, le module d'affichage MA peut éventuellement comporter une entrée permettant à l'équipe de surveillance de lui adresser des instructions Ins relatives à l'affichage, par exemple pour choisir une portion de carte, ou pour effectuer un agrandissement (« zoom »), ou encore pour localiser un aéroport. A cet effet, le dispositif de traitement DT peut comporter ou être couplé à une interface homme/machine, servant également à lui communiquer les définitions des ensembles Ei de Ni valeurs seuil choisies.

Dans ce qui précède, on a décrit une application de l'invention au traitement de données de navigation quasiment en temps réel, chaque groupe de données cartographiques Gi étant en effet déterminé à partir des données d'intégrité les plus récentes. Mais, le dispositif de traitement DT selon l'invention peut également être utilisé dans le cadre d'études prévisionnelles et/ou d'études destinées à déterminer l'influence de pannes et/ou d'intervention de maintenance sur des équipements du système de navigation par satellites, comme par exemple des stations de surveillance.

Ces études peuvent permettre de simuler des situations avant qu'elles ne surviennent, afin de remédier ou de prévoir des parades aux éventuels inconvénients qu'elles pourraient occasionner.

Pour ce faire, on alimente le module de calcul (S)MC, d'une part, avec des premières D1, deuxièmes D2 et troisièmes D3 données de référence censées être représentatives d'un exemple de fonctionnement du système de navigation par satellites, et d'autre part, avec des quatrièmes données D4 représentatives d'une architecture choisie du système de navigation par satellites.

On entend ici par « architecture choisie » la définition de l'ensemble des équipements du système de navigation par satellites dont les données sont utiles au module de calcul (S)MC pour déterminer des données d'intégrité DI.

Par exemple, l'équipe de surveillance peut déterminer l'influence sur le(s) groupe(s) de données cartographiques d'intégrité Gi de l'interruption de fonctionnement d'une ou plusieurs stations de surveillance en raison d'une panne ou d'une opération de maintenance.

Le dispositif de traitement DT selon l'invention, et notamment son module de traitement MT et ses éventuels module de calcul MC (ou SMC) et module d'affichage MA, peuvent être réalisés sous la forme de circuits électroniques, de modules logiciels (ou informatiques), ou d'une combinaison de circuits et de logiciels.

L'invention offre un certain nombre d'avantages, parmi lesquels :
- elle introduit de la flexibilité dans les prises de décision d'interruption d'utilisation des données de navigation, permettant ainsi de limiter le nombre d'utilisateurs pénalisés par une interruption, et d'accroître les performances opérationnelles du système de navigation par satellites dans certaines zones de service,
- elle permet de déterminer l'intégralité de la zone de service dans laquelle les données de navigation sont accessibles aux utilisateurs, c'est-à-dire quelle que soit la marge d'intégrité considérée, et par conséquent d'adapter l'offre de service en fonction de la zone déterminée.

L'invention ne se limite pas aux modes de réalisation de dispositif de traitement décrits ci-avant, seulement à titre d'exemple, mais elle englobe toutes les variantes que pourra envisager l'homme de l'art dans le cadre des revendications ci-après.

## Revendications

1. Dispositif (DT) de traitement de données de navigation relatives à des satellites d'un système de navigation par satellites, en orbite autour d'un astre, **caractérisé en ce qu'**il comprend des moyens de traitement (MT) agencés pour comparer des données d'intégrité (DI), représentatives de valeurs de fiabilité de corrections d'erreurs de positionnement orbital et/ou de synchronisation desdits satellites, à au moins un ensemble choisi de N valeurs seuils choisies, N étant un entier supérieur ou égal à un, de manière à délivrer au moins un groupe de données cartographiques représentatives d'au plus N+1 zones géographiques définies par rapport audit astre et dans lesquelles lesdites données d'intégrité sont soit inférieures auxdites N valeurs seuil dudit ensemble choisi, soit supérieures auxdites N valeurs seuil dudit ensemble choisi, soit encore comprises entre deux valeurs seuil dudit ensemble choisi.

2. Dispositif selon la revendication 1, **caractérisé en ce que** lesdits moyens de traitement (MT) sont agencés pour comparer des données d'intégrité (DI) à au moins deux ensembles (Ei) choisis, de Ni valeurs seuils choisies, les Ni étant des entiers supérieurs ou égaux à un, de manière à délivrer au moins deux groupes (Gi) de données cartographiques représentatives chacune d'au plus Ni+1 zones géographiques (Zj) définies par rapport audit astre et dans lesquelles lesdites données d'intégrité sont soit inférieures auxdites Ni valeurs seuil de l'ensemble (Ei) choisi, soit supérieures auxdites N valeurs seuil de l'ensemble (Ei) choisi, soit encore comprises entre deux valeurs seuil de l'ensemble (Ei) choisi.

3. Dispositif selon l'une des revendications 1 et 2, **caractérisé en ce que** lesdites valeurs seuil sont représentatives de marges d'intégrité par rapport à une valeur de référence, elle-même définie par rapport à l'utilisateur dudit système de navigation par satellites disposant de la valeur de fiabilité de corrections d'erreurs de positionnement orbital et/ou de synchronisation des satellites la moins bonne.

4. Dispositif selon l'une des revendications 1 à 3, **caractérisé en ce que** lesdits moyens de traitement (MT) sont agencés pour déterminer chaque groupe de données cartographiques (Gi) à partir des données d'intégrité (DI) les plus récentes, de manière à permettre un fonctionnement quasiment en temps réel.

5. Dispositif selon l'une des revendications 1 à 4, **caractérisé en ce qu'**il comprend des moyens de calcul (MC ; SMC) agencés pour déterminer lesdites données d'intégrité (DI) à partir au moins i) de premières données (D1) représentatives d'informations contenues dans des messages de navigation diffusés par lesdits satellites, ii) de deuxièmes données (D2) représentatives d'estimations des positions desdits satellites, et iii) de troisièmes données (D3) représentatives d'estimations des décalages temporels des horloges desdits satellites par rapport à une horloge de référence.

6. Dispositif selon la revendication 5, **caractérisé en ce que** lesdits moyens de calcul (MC ; SMC) sont agencés pour déterminer lesdites données d'intégrité (DI) à partir de premières (D1), deuxièmes (D2) et troisièmes (D3) données de référence et de quatrièmes données (D4) représentatives d'une architecture choisie dudit système de navigation par satellites, de manière à permettre un fonctionnement prévisionnel et/ou à déterminer l'influence de pannes et/ou d'intervention de maintenance sur des équipements dudit système de navigation par satellites.

7. Dispositif selon l'une des revendications 5 et 6, **caractérisé en ce que** lesdits moyens de traitement (MT) sont intégrés dans lesdits moyens de calcul (MC).

8. Dispositif selon l'une des revendications 1 à 7, **caractérisé en ce qu'**il comprend des moyens d'affichage (MA) agencés pour matérialiser les zones géographiques (Zj), définies par lesdites données cartographiques déterminées, par rapport à des régions correspondantes à la surface dudit astre.

9. Utilisation du dispositif de traitement de données de navigation (DT) selon l'une des revendications précédentes, pour les services d'intégrité de systèmes de navigation par satellites choisis dans un groupe comprenant au moins GALILEO, GPS, EGNOS et WAAS, ainsi que leurs variantes et leurs équivalents.
